# EUROPÄISCHE PATENTSCHRIFT

(11) **EP 2 591 243 B1**
(45) Veröffentlichungstag und Bekanntmachung des Hinweises auf die Patenterteilung: **02.07.2014**
(21) Anmeldenummer: 11729421.5
(22) Anmeldetag: 05.07.2011
(51) Int. Cl.: F16C 33/66, F16C 33/58, F16C 35/067, F16C 35/04

(54) **FETTDURCHFÜHRUNG BEI GEFLANSCHTEN LAGERN**
PASSAGE FOR GREASE IN FLANGED BEARINGS
PASSAGE DE GRAISSE POUR PALIERS À BRIDE

(30) Priorität: 06.07.2010 DE 102010026270
(43) Veröffentlichungstag der Anmeldung: 15.05.2013
(73) Patentinhaber: Aktiebolaget SKF, 415 50 Göteborg (SE)
(72) Erfinder: HOFMANN, Matthias, 97422 Schweinfurt (DE); KRISTANDT, Holger, 97502 Euerbach (DE); LIANG, Baozhu, 97456 Hambach (DE); PICKEL, Edgar, 97334 Sommerach (DE); SEUBERLING, Mathias, 97633 Großeibstedt (DE); HORN, Werner, 97422 Schweinfurt (DE); SCHULZ, Ingo, 97447 Gerolzhofen (DE)
(74) Vertreter: Schonecke, Mitja
(86) Internationale Anmeldenummer: PCT/EP2011/061338
(87) Internationale Veröffentlichungsnummer: WO 2012/004272

(56) Entgegenhaltungen:
- WO-A1-03/019004
- DE-A1- 4 317 618
- DE-A1-102007 048 377
- DE-A1-102008 036 223
- US-A1- 2008 050 061

## Beschreibung

### Stand der Technik

Bei Lagern mit Fettschmierung, die über einen der Ringe an ein Gehäuse angeflanscht sind, z. B. durch eine Verschraubung, ergibt sich das Problem der Fettzuführung und auch der Fettabfuhr, da durch die zahlreichen Schraubenlöcher der zur Verfügung stehende Platz sehr begrenzt ist. Ein Beispiel für ein solches Lager ist aus der Druckschrift WO 03/019004 A1 bekannt. Durch das Problem werden aufwändige Zusatzinstallationen notwendig.

Bislang wurde dieses Problem durch aufwändige Zusatzinstallationen gelöst.

### Erfindung

Das beschriebene Problem wird dadurch gelöst, dass das Fett auf Gehäuseseite durch eine radiale Bohrung, die zwischen den Schraubenbohrungen hindurchführt, dem Zwischenraum von Außenring und Innenring zugeführt wird. Der Fettaustritt erfolgt durch eine Bohrung auf der gehäuseabgewandten Seite. Diese Bohrung mündet in einem Schraubendurchgangsloch, welches unter anderem zur Verschraubung des Rings mit dem Gehäuse dient. In diesem steckt eine Schraube, die so kurz ist, dass sie die Fettaustrittsbohrung nicht verschließt, sodass das Fett durch die nicht von der Schraube verschlossene Bohrung austreten kann. Das Durchgangsloch kann mit einem durchgehenden Gewinde versehen werden, um Zusatzinstallationen zum z. B. Fettauffang aufzunehmen.

Vorteilhaft ist, dass keine zusätzlichen Installationen zur Fettzuführung und Fettabführung notwendig sind. Ferner ist ein Fettkanal vollständig innenliegend. Außerdem werden vorhandene Ressourcen genutzt (Gewindebohrung), daher ist die Lösung (fast) eine "von selbst" Lösung, wobei nur die radiale Bohrung zur Fettzufuhr extra eingebracht werden muss, weshalb die Lösung einfach ist. Außerdem ist vorteilhaft, dass sich eine eindeutige Durchfettungsrichtung ergibt, weshalb die Lösung eindeutig ist.

Vorzugsweise beträgt ein Durchmesser der radialen Bohrung auf Gehäuseseite zwischen acht und zehn Millimetern. Hierdurch kann ein effektives Durchfetten erreicht werden.

Mit Vorteil beträgt ein Durchmesser der Bohrung auf der gehäuseabgewandten Seite fünfzehn Millimeter oder mehr. Dadurch kann eine wirksame Fettabführung auf sichere Weise erreicht werden.

Nachfolgend werden unter Bezugnahme auf die beigefügten Zeichnungen und Figuren Ausführungsbeispiele näher beschrieben und erläutert.
Fig. 1 zeigt einen Teilschnitt durch einen Teil eines erfindungsgemäßen Lagers und durch einen Teil eines Gehäuses,
Fig. 2 zeigt eine Windkraftanlage mit dem Lager, und
Fig. 3 zeigt einen Teilschnitt durch einen Teil einer alternativen Ausführungsform eines erfindungsgemäßen Lagers und durch ein Gehäuse.

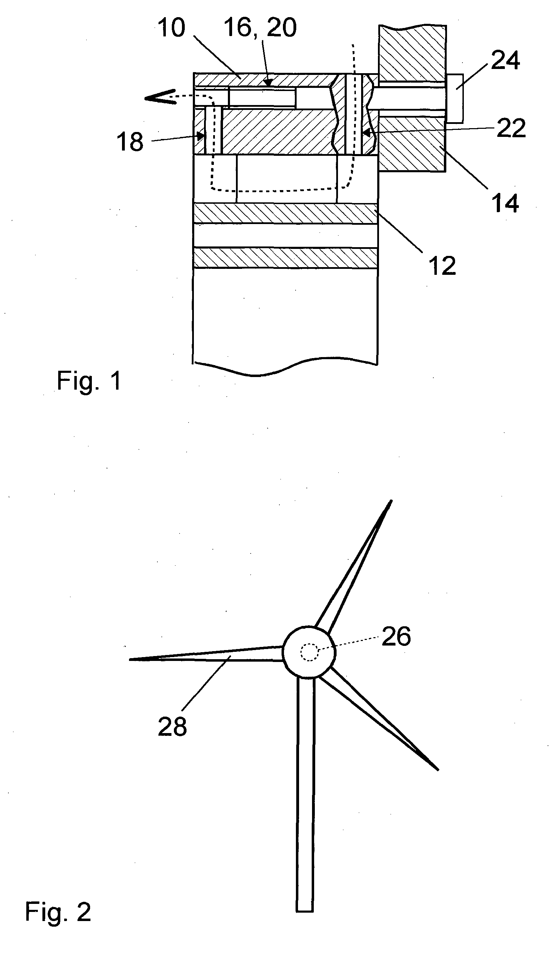

Fig. 1 zeigt einen Teilschnitt durch einen Teil eines Lagers mit Fettschmierung und durch einen Teil eines Gehäuses 14, wobei das Lager einen ersten Ring 10 aufweist, der als Außenring ausgebildet ist. Ferner weist das Lager einen zweiten, als Innenring 12 ausgebildeten Ring 12 auf. Das Lager ist über den Ring 10 an das Gehäuse 14 angeflanscht. Des Weiteren weist das Lager Schraubenlöcher 16 auf. Die Schraubenlöcher sind in den Außenring eingebracht. Eines der Schraubenlöcher 16 ist ein Schraubendurchgangsloch 20, in welche eine Bohrung 18 mündet, welche auf der gehäuseabgewandten Seite des Rings 10 angeordnet ist und durch welche der Fettaustritt für die Fettschmierung erfolgt. Die Bohrung 18 verläuft entlang einer radialen Richtung des Lagers. Das Schraubendurchgangsloch weist ein durchgehendes Gewinde auf. In einer alternativen Ausführungsform weist nur ein Teil des Schraubendurchgangsloches ein Gewinde auf, so dass sich das Schraubendurchgangsloch dann von einem Schraubendurchgangsloch mit durchgehendem Gewinde unterscheidet. Außerdem steckt in dem Schraubendurchgangsloch 20 eine Schraube 24, die so kurz ist, dass sie die Bohrung auf der gehäuseabgewandten Seite des Rings 10 unverschlossen lässt, so dass das Fett durch die Bohrung 18 auf der gehäuseabgewandten Seite austreten kann. Das Schraubendurchgangsloch 20 dient unter anderem zur Verschraubung des Rings 10 mit dem Gehäuse 14, wobei die Verschraubung durch die Schraube 24 erfolgt. Der Durchmesser der Bohrung 18 beträgt dreißig Millimeter.

Das Lager weist auf Gehäuseseite eine radiale Bohrung 22 auf, welche zwischen den als Schraubenbohrungen ausgebildeten Schraubenlöchern 16 hindurchführt. Die radiale Bohrung ist in den Ring 10 eingebracht. Durch die radiale Bohrung 22 wird das Fett dem Zwischenraum von Außenring 10 und Innenring 12 zugeführt. In dem Zwischenraum erfolgt ein Transport des Fetts besonders einfach in axiale Richtung des Lagers. Die radiale Bohrung 22 weist eine axiale Richtung auf, welche sich von einer axialen Richtung der Bohrung 18 unterscheidet. Die axiale Richtung der Bohrung 22 ist parallel zu einer ersten radialen Richtung des Lagers. Ferner ist die axiale Richtung der Bohrung 18 parallel zu einer zweiten radialen Richtung des Lagers, welche sich von der ersten radialen Richtung des Lagers unterscheidet. Der Durchmesser der Bohrung 22 beträgt acht Millimeter.

Bei einem Betrieb bewegt sich das Fett durch die Bohrung 22, durch den Zwischenraum zwischen Außenring 10 und Innenring 12 und durch die Bohrung 18 in das Schraubendurchgangsloch 20, durch welches es das Lager verlässt. An einem Ende des Schraubendurchgangslochs 20 kann ein Fettauffangmittel angeordnet sein (nicht gezeigt). Ferner kann an einem Ende der Bohrung 22, welches von dem Zwischenraum abgewandt ist, ein Schmiernippel angeordnet sein (nicht gezeigt).

Figur 2 zeigt eine Windkraftanlage, welche das Lager aufweist. Das Lager bildet das Hauptlager 26 der Windkraftanlage und lagert direkt den Rotor 28 der Windkraftanlage. Das Lager kann auch für andere Maschinen als Windkraftanlagen verwendet werden.

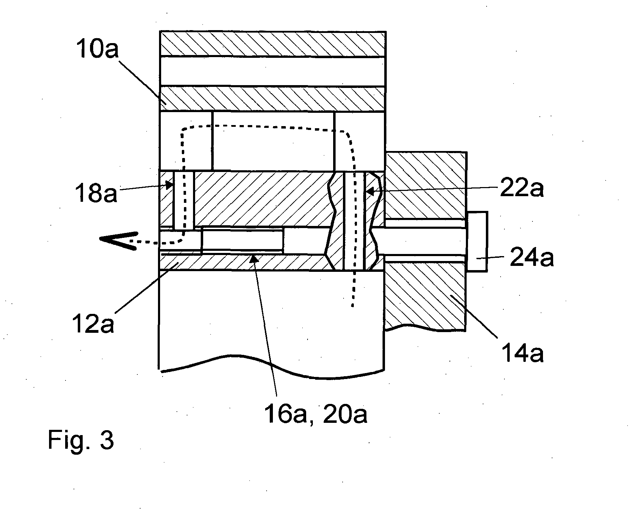

In Figur 3 ist ein alternatives Ausführungsbeispiel dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen des Ausführungsbeispiels in Fig. 3 der Buchstabe "a" hinzugefügt. Die nachfolgende Beschreibung beschränkt sich im Wesentlichen auf die Unterschiede zu dem Ausführungsbeispiel in den Fig. 1 und Fig. 2, wobei bezüglich gleich bleibender Bauteile, Merkmale und Funktionen auf die Beschreibung des Ausführungsbeispiels in den Fig. 1 und Fig. 2 verwiesen werden kann.

Fig. 3 zeigt einen Teilschnitt durch einen Teil einer alternativen Ausführungsform eines erfindungsgemäßen Lagers und durch ein Gehäuse 14a. Ein Innenring 12a des Lagers ist durch eine Schraube 14a mit dem Gehäuse 14a verschraubt. Der Innenring 12a weist Schraubenlöcher 16a auf. Eines der Schraubenlöcher 16a ist ein Schraubendurchgangsloch 20a, in welches eine Bohrung 18a, welche in den Innenring 12a eingebracht ist, mündet. Eine weitere Bohrung 22a des Innenrings ist auf einer gehäusezugewandten Seite des Innenrings 12a angeordnet.

### Bezugszeichenliste

| | |
|---|---|
| 10 | Ring |
| 12 | Ring |
| 14 | Gehäuse |
| 16 | Schraubenloch |
| 18 | Bohrung |
| 20 | Schraubendurchgangsloch |
| 22 | Bohrung |
| 24 | Schraube |
| 26 | Hauptlager |
| 28 | Rotor |

## Patentansprüche

1. Lager mit Fettschmierung, welches über einen seiner Ringe (10; 12a) an ein Gehäuse (14; 14a) anflanschbar ist und welches Schraubenlöcher (16; 16a) aufweist, mit einer Bohrung (18; 18a) auf der gehäuseabgewandten Seite, durch welche der Fettaustritt erfolgt,
**dadurch gekennzeichnet, dass**
die Bohrung (18; 18a) in einem Schraubendurchgangsloch (20; 20a) mündet, welches unter anderem zur Verschraubung des Rings (10; 12a) mit dem Gehäuse (14; 14a) dient.

2. Lager nach Anspruch 1, wobei das Lager auf Gehäuseseite eine radiale Bohrung (22; 22a) aufweist, welche zwischen den als Schraubenbohrungen ausgebildeten Schraubenlöchern (16; 16a) hindurchführt und durch welche das Fett dem Zwischenraum von Außenring (10; 10a) und Innenring (12; 12a) zugeführt wird.

3. Lager nach Anspruch 2, wobei die radiale Bohrung (22; 22a) auf Gehäuseseite eine axiale Richtung aufweist, welche sich von einer axialen Richtung der Bohrung (18; 18a) auf der gehäuseabgewandten Seite unterscheidet.

4. Lager nach einem der Ansprüche 2 oder 3, wobei ein Durchmesser der radialen Bohrung (22; 22a) auf Gehäuseseite zwischen acht und zehn Millimetern beträgt.

5. Lager nach einem der vorherigen Ansprüche, wobei in dem Schraubendurchgangsloch (20; 20a) eine Schraube (24; 24a) steckt, die so kurz ist, dass sie die Bohrung (18; 18a) auf der gehäuseabgewandten Seite unverschlossen lässt, so dass das Fett durch die Bohrung (18; 18a) auf der gehäuseabgewandten Seite austreten kann.

6. Lager nach einem der vorherigen Ansprüche, wobei das Schraubendurchgangsloch (20; 20a) ein durchgehendes Gewinde aufweist.

7. Lager nach einem der vorherigen Ansprüche, wobei ein Durchmesser der Bohrung (18a; 18a) auf der gehäuseabgewandten Seite fünfzehn Millimeter oder mehr beträgt.

8. Windkraftanlage mit einem Lager nach einem der vorherigen Ansprüche.

## Claims

1. Bearing with grease lubrication, which bearing can be flange-connected via one of its rings (10; 12a) to a housing (14; 14a), and which bearing has screw holes (16; 16a), having a hole (18; 18a) on the side which faces away from the housing, through which hole (18; 18a) the grease discharge takes place, **characterized in that** the hole (18; 18a) opens into a screw through hole (20; 20a) which serves, inter alia, to screw the ring (10; 12a) to the housing (14; 14a).

2. Bearing according to Claim 1, the bearing having a radial hole (22; 22a) on the housing side, which radial hole (22; 22a) runs through between the screw holes (16; 16a) which are configured as screw holes, and through which radial hole (22; 22a) the grease is fed to the intermediate space of outer ring (10; 10a) and inner ring (12; 12a).

3. Bearing according to Claim 2, the radial hole (22; 22a) having an axial direction on the housing side, which housing side differs from an axial direction of the hole (18; 18a) on the side which faces away from the housing.

4. Bearing according to either of Claims 2 and 3, a diameter of the radial hole (22; 22a) on the housing side being between eight and ten millimetres.

5. Bearing according to one of the preceding claims, a screw (24; 24a) being plugged in the screw through hole (20; 20a), which screw (24; 24a) is so short that it leaves the hole (18; 18a) unclosed on the side which faces away from the housing, with the result that the grease can exit through the hole (18; 18a) on the side which faces away from the housing.

6. Bearing according to one of the preceding claims, the screw through hole (20; 20a) having a continuous thread.

7. Bearing according to one of the preceding claims, a diameter of the hole (18; 18a) being fifteen millimetres or more on the side which faces away from the housing.

8. Wind energy plant having a bearing according to one of the preceding claims.

## Revendications

1. Palier avec lubrification à la graisse, qui peut être fixé par bridage à un boîtier (14; 14a) au moyen d'une de ses bagues (10; 12a) et qui présente des trous de vis (16; 16a), avec un alésage (18; 18a) sur le côté à l'opposé du boîtier, à travers lequel se fait la sortie de la graisse, **caractérisé en ce que** l'alésage (18; 18a) débouche dans un trou de passage de vis (20; 20a), qui sert entre autres pour le vissage de la bague (10; 12a) au boîtier (14; 14a).

2. Palier selon la revendication 1, dans lequel le palier présente sur le côté tourné vers le boîtier un alésage radial (22; 22a), qui traverse entre les trous de vis (16; 16a) réalisés comme alésages de vis et à travers lequel la graisse est introduite dans l'espace intermédiaire entre la bague extérieure (10; 10a) et la bague intérieure (12; 12a).

3. Palier selon la revendication 2, dans lequel l'alésage radial (22; 22a) présente sur le côté tourné vers le boîtier une direction radiale, qui se différencie d'une direction radiale de l'alésage (18; 18a) sur le côté à l'opposé du boîtier.

4. Palier selon l'une quelconque des revendications 2 ou 3, dans lequel un diamètre de l'alésage radial (22; 22a) sur le côté tourné vers le boîtier vaut entre huit et dix millimètres.

5. Palier selon l'une quelconque des revendications précédentes, dans lequel une vis (24; 24a) est engagée dans le trou de passage de vis (20; 20a), et est à ce point courte qu'elle laisse l'alésage (18; 18a) ouvert sur le côté à l'opposé du boîtier, de telle manière que la graisse puisse sortir par l'alésage (18; 18a) sur le côté à l'opposé du boîtier.

6. Palier selon l'une quelconque des revendications précédentes, dans lequel le trou de passage de vis (20; 20a) présente un filetage continu.

7. Palier selon l'une quelconque des revendications précédentes, dans lequel un diamètre de l'alésage (18; 18a) sur le côté à l'opposé du boîtier vaut quinze millimètres ou plus.

8. Eolienne avec un palier selon l'une quelconque des revendications précédentes.
